# EUROPEAN PATENT APPLICATION

(11) **EP 4 803 355 A1**
(43) Date of publication of application: **09.09.2026**
(21) Application number: 26162141.1
(22) Date of filing: 04.03.2026
(51) Int. Cl.: B60L 55/00, B60L 53/10, B60L 53/14, B60L 53/22, B60L 53/66

(54) **ELECTRIC VEHICLE CHARGING CONTROL DEVICE, VEHICLE-TO-VEHICLE CHARGING SYSTEM, AND METHOD**

(30) Priority: 07.03.2025 KR 20250030142; 07.03.2025 KR 20250030044
(71) Applicant: LG Innotek Co., Ltd., Seoul 07796 (KR)
(72) Inventor: Shin, Kwangseob, 07796 SEOUL (KR); Song, Iljong, 07796 SEOUL (KR); Kim, Hyun Woong, 07796 SEOUL (KR)
(74) Representative: DREISS Patentanwälte PartG mbB

(57) **Abstract**

The electric vehicle charging control device according to the present invention may comprise: a power input unit configured to supply an input voltage; a charging control signal generation unit configured to generate a charging control signal based on the input voltage supplied from the power input unit; and a charging control unit configured to determine characteristics of the charging control signal generated by the charging control signal generation unit, wherein the charging control signal generation unit comprises a plurality of voltage conversion units, and each of the plurality of voltage conversion units converts a voltage by a different voltage conversion scheme. According to the electric vehicle charging control device of the present invention, charging between electric vehicles may be controlled, and efficiency of generating a signal for controlling vehicle-to-vehicle charging may be improved.

## Description

### [Technical Field]

The present invention relates to vehicle-to-vehicle battery charging, and more particularly to a device for controlling vehicle-to-vehicle charging of an electric vehicle based on a charging control signal. In addition, the present invention relates to vehicle-to-vehicle charging control and power transfer for an electric vehicle battery.

### [Background Art]

Electric vehicles (EVs) are being increasingly adopted worldwide as environmentally friendly means of transportation, and accordingly, technologies for battery charging of electric vehicles have continued to advance. In general, battery charging of an electric vehicle is performed at a fixed charging station, and the charging station is operated by applying various charging standards and communication protocols, such as SAE 2847/2, SAE J1772, ISO 15118, CCS (Combined Charging System), and Tesla Supercharger, for stable power transfer with the electric vehicle.

In SAE J1772 and ISO 15118, a PWM (pulse width modulation) signal is used as a charging control signal for a vehicle-side charging controller (Electric Vehicle Communication Controller, EVCC) to monitor and control a charging status. A scheme for determining a charger status and an allowable charging current using the PWM signal is commonly used in a fixed charging infrastructure and enables stable charging management.

However, a need has arisen for vehicle-to-vehicle (V2V) charging in which battery power is shared between vehicles. V2V charging may be usefully employed in environments in which charging infrastructure is insufficient by enabling vehicles to directly share power, thereby providing emergency charging when needed.

Conventional PWM signal generation circuits are designed for use in high-voltage and high-power environments, such as charging stations. Therefore, there is a need for a new PWM signal generation and control scheme suitable for V2V charging, and technological improvements are required to enable more efficient and stable charging.

Advances in battery technology, electrical and electronic technology, and communications technology have significantly improved the performance, efficiency, and user convenience of electric vehicles. In addition, in conjunction with efforts to address environmental issues and conserve energy, the adoption of electric vehicles continues to increase. Improvements in the energy density of lithium-ion batteries have increased battery capacity, thereby significantly improving the driving range of electric vehicles.

In addition, research is underway on charging high-voltage batteries of electric vehicles. International standards regarding communication between an electric vehicle battery charging station and an in-vehicle charging control device, including those related to wired charging such as CCS, Tesla, and NACS, are also being actively developed.

Research is actively underway on methods for receiving power from a charging station to charge an electric vehicle battery, and research is also actively underway on charging methods in which battery power is shared between electric vehicles.

Since electric vehicle batteries adopt a high-voltage charging scheme, safety management related to power is essential and is an important task. Furthermore, in vehicle-to-vehicle (V2V) charging, there is a need for efficient power transfer and safety management with respect to power transfer.

In addition, in a system for transmitting power to charge a high-voltage battery between electric vehicles, there is a need for advances in a power transmission system that controls electric vehicle charging according to a charging type or a charging mode.

### [PRIOR ART DOCUMENTS]

### [PATENT DOCUMENTS]

Korean Patent Application Publication No. 10-2021-0097950 (published Aug. 10, 2021)
Korean Patent Registration No. 2722310 (issued Oct. 22, 2024)

### [Disclosure]

### [Technical Problem]

The present invention aims to effectively control charging during vehicle-to-vehicle charging. In addition, the present invention aims to provide a device capable of controlling charging optimized for a vehicle-to-vehicle charging scheme.

The present invention aims to effectively transfer power for charging during vehicle-to-vehicle charging. In addition, the present invention aims to provide a system and method capable of providing power supply and charging control functions while improving stability of charging mode switching based on control of a power supply mode and a power charging mode of a vehicle.

### [Technical Solution]

### [Advantageous Effects]

According to the present invention, the electric vehicle charging control device supporting vehicle-to-vehicle charging is capable of effectively detecting an error occurring during charging mode switching.

In addition, the electric vehicle charging control device supporting vehicle-to-vehicle charging may reduce noise of a charging control signal and improve cost efficiency.

In addition, the vehicle-to-vehicle charging control device may effectively detect an error occurring during charging mode switching, and may control charging to minimize safety risks during charging by detecting the error occurring during charging mode switching.

### [Description of Drawings]

FIG. 1 is a conceptual diagram of an electric vehicle and an electric vehicle charging station.
FIG. 2 is a configuration diagram of an electric vehicle battery charging system including an electric vehicle supply equipment (EVSE).
FIG. 3 is a conceptual diagram of electric vehicle-to-electric vehicle charging according to the present invention.
FIG. 4a is a diagram illustrating a circuit for controlling electric vehicle-to-electric vehicle charging according to the present invention.
FIG. 4b is a diagram illustrating a circuit for controlling charging in an electric vehicle and charging station system according to the present invention.
FIG. 5 is a diagram for describing a linear regulator (LDO) included in a charging control signal generation unit.
FIG. 6 is a diagram for describing a DC-DC converter included in a charging control signal generation unit.
FIG. 7 is a diagram for describing a charging control signal generation unit including a DC-DC converter.
FIG. 8 is a diagram for describing a charging control signal generation unit including a linear regulator according to one embodiment of the present invention.
FIG. 9 is a diagram illustrating a circuit for controlling a charging mode of an electric vehicle according to the present invention.
FIG. 10 is a diagram for illustrating an operation of an integrated charging control circuit when an electric vehicle operates in an EV mode according to the present invention.
FIG. 11 is a diagram for illustrating an operation of an integrated charging control circuit when an electric vehicle operates in an EVSE mode according to the present invention.
FIGS. 12a and 12b are diagrams for illustrating voltage values detected according to a charging mode of an electric vehicle according to the present invention.
FIG. 13 is a diagram for illustrating an example of a positive voltage detection circuit of an electric vehicle charging control circuit according to the present invention.
FIG. 14 is a diagram for illustrating an example of a negative voltage detection circuit of the electric vehicle charging control circuit according to the present invention.
FIG. 15 is a diagram for illustrating an example of a switch operation detection circuit of the electric vehicle charging control circuit according to the present invention.
FIG. 16 is a diagram for illustrating an electric vehicle equipped with an electric vehicle charging system for vehicle-to-vehicle charging according to one embodiment of the present invention.
FIG. 17 is a diagram for illustrating power transfer according to a charging type of the electric vehicle charging system of FIG. 16.
FIG. 18 is a diagram for illustrating an electric vehicle equipped with an electric vehicle charging system for vehicle-to-vehicle charging according to one embodiment of the present invention.
FIG. 19 is a diagram for illustrating power transfer according to a charging type of the electric vehicle charging system of FIG. 18.
FIG. 20 is a flowchart for illustrating a method for vehicle-to-vehicle charging according to one embodiment of the present invention.

### [Mode for Invention]

Specific details of the embodiments are set forth in the following detailed description and the accompanying drawings.

The advantages and features of the present invention, and the manner in which they are attained, will become apparent with reference to the embodiments described hereinafter in conjunction with the accompanying drawings. However, the present invention is not limited to the embodiments disclosed below and may be embodied in various different forms. The embodiments are provided only to make the disclosure of the present invention complete and to fully convey the scope of the invention to those having ordinary skill in the art, and the present invention is defined only by the scope of the appended claims. Like reference numerals designate like elements throughout the specification.

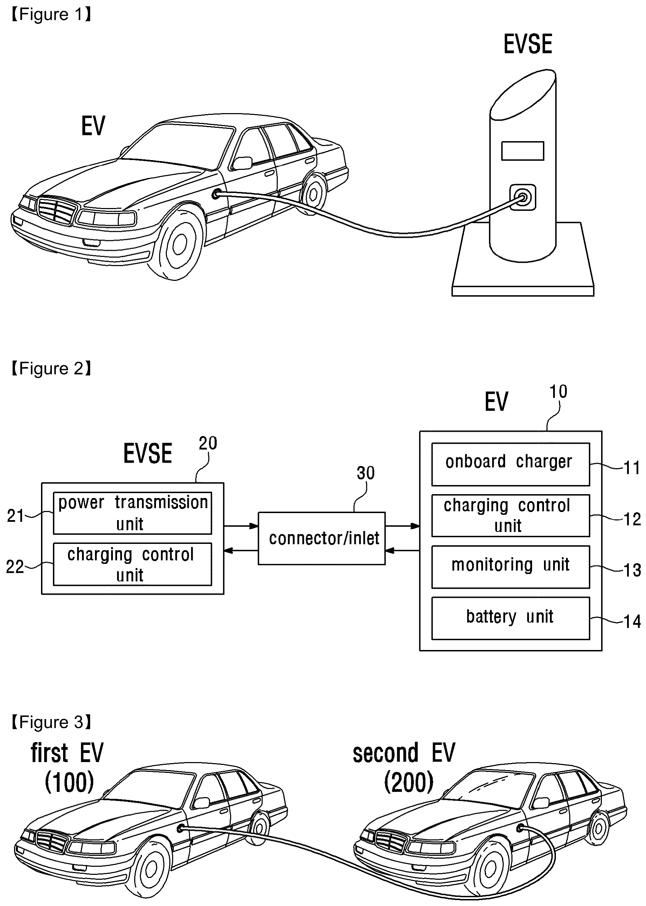

FIG. 1 is a conceptual diagram of an electric vehicle and an electric vehicle charging station.

An electric vehicle battery charging system may operate by transmitting and receiving, between an electric vehicle supply equipment (EVSE) and an electric vehicle (EV), a charging control signal, charging control information, and power.

As illustrated, the EVSE may be located at a charging station. In addition, the EVSE may be located in a home or may be implemented to be portable. In addition, the EVSE may be implemented in an electric vehicle (EV) and may be configured to perform a function of charging another electric vehicle (EV).

FIG. 2 is a configuration diagram of an electric vehicle battery charging system including an electric vehicle supply equipment (EVSE).

As illustrated, the electric vehicle battery charging system may include an EV (10), an EVSE (20), and a connector/inlet (30) connecting the EV (10) and the EVSE (20). The EV (10) may include an onboard charger (11), a charging control unit (12), a monitoring unit (13), and a battery unit (14).

When slow charging or AC charging of the electric vehicle is performed, the onboard charger (11) may convert power received from the EVSE (20) and may supply the converted power to a high-voltage battery to charge the battery. In addition, the onboard charger (11) may be implemented to perform voltage boosting, rectification, high-voltage cutoff, and CAN communication for slow charging or AC charging. In addition, even when slow charging or AC charging is performed, the onboard charger (11) may not be used depending on charging control circuitry within the EV (10).

The charging control unit (12) may communicate with an MCU (microcontroller unit) in the vehicle and the EVSE (20) for charging of a battery of the electric vehicle, and may generate a charging control signal. Specifically, the MCU in the vehicle may comprise components related to battery charging of the electric vehicle, such as a BMS (battery management system), a BMU (battery management unit), a CMU (cell monitoring unit), a BMIC (battery monitoring integrated circuit), a CMM (cell management microcontroller), and a BCU (battery control unit).

The charging control unit (12) may receive a charging control signal transmitted from the EVSE (20) and may generate information and signals for controlling charging of the electric vehicle. A charging control signal generated for charging control of the electric vehicle battery may be transmitted to the MCU in the vehicle, thereby enabling precise control of a battery charging process.

The monitoring unit (13) may perform, in charging a battery of an electric vehicle, detection of overvoltage, detection of current leakage, detection of occurrence of an abnormal signal, and detection of whether a circuit is disconnected. For example, the monitoring unit (13) may detect whether the EVSE (20) and the EV (10) are electrically connected for charging the battery of the electric vehicle, and may detect whether the EV (10) is connected to ground for safety of charging the battery of the electric vehicle.

The battery unit (14) may store electrical energy received from the EVSE (20) for charging a battery of an electric vehicle. In addition, the battery unit (14) may measure SOC (state of charge) information indicating a state of the stored electrical energy and may perform power conversion.

Referring to FIG. 2, the EVSE (20) may comprise a power transmission unit (21) and a charging control unit (22). The power transmission unit (21) may transmit power to the EV (10) based on a charging control signal and charging control information. The charging control unit (22) may transmit a signal for controlling charging, or may start or stop charging, through communication with the charging control unit (12) of the EV (10).

Communication between the charging control unit (22) of the EVSE (20) and the charging control unit (12) of the EV (10) may be performed in accordance with a standard specification such as CHAdeMO, CCS (Combined Charging System), GB/T, or NACS, without being limited thereto. For example, when communication is performed in accordance with the CCS (Combined Charging System) specification, a charging control signal may be transmitted and received through PLC and PWM communication.

In addition, the charging control signal may be a charging control signal in accordance with a standard specification such as CHAdeMO, CCS, GB/T, or NACS, and may satisfy various requirements for charging control specified in each specification.

The connector/inlet (30) may provide a connection for transmission of power, a charging control signal, and charging control information between the EVSE (20) and the EV (10). Specifically, the connector/inlet (30) may comprise a power port, a ground port, a CP (control pilot) port, and a PD (proximity detection) port. The power port may transmit power provided from the EVSE (20) to the EV (10). The CP (control pilot) port may transmit a signal for controlling charging and may support PLC (power line communication), PWM (pulse width modulation), and/or CAN (controller area network) communication. The PD port may detect whether the connector is connected to the inlet.

FIG. 3 is a conceptual diagram of electric vehicle-to-electric vehicle charging according to the present invention.

As illustrated, electric vehicle-to-electric vehicle charging may be performed by connecting a first EV (100) and a second EV (200). The first EV (100) may operate in an EVSE mode or a V2V (vehicle-to-vehicle) mode in which power is transmitted and/or supplied. The second EV (200) may operate in an EV mode in which power is received and/or supplied.

In this specification, the EVSE mode may be referred to as a V2V mode or a first mode, and the EV mode may be referred to as a second mode.

The first EV (100) may be configured to transmit and/or supply power to the second EV (200), and may be configured to transmit and/or receive power from the EVSE (20).

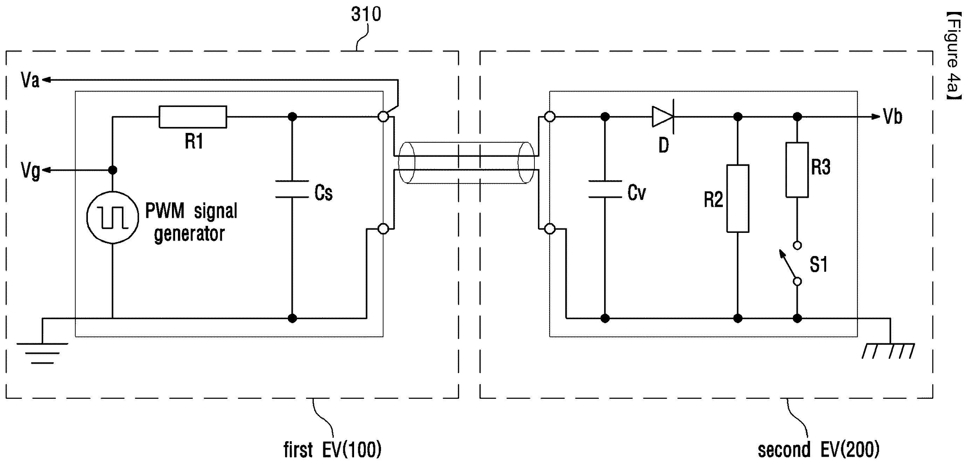

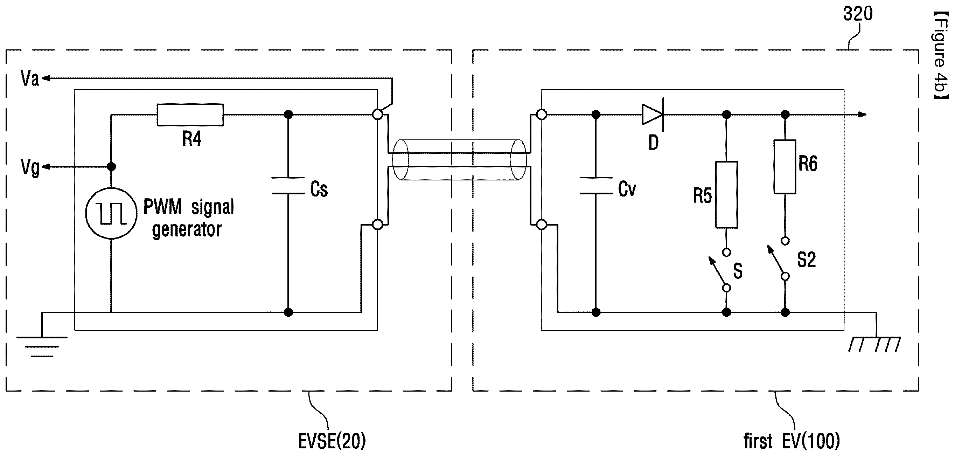

FIG. 4a is a diagram illustrating a circuit for controlling electric vehicle-to-electric vehicle charging according to the present invention. FIG. 4b is a diagram illustrating a circuit for controlling charging in an electric vehicle and charging station system according to the present invention.

Referring to FIG. 4a, the first EV (100) may operate in an EVSE mode in which power may be transmitted and/or supplied to the second EV (200). Accordingly, the first EV (100) may comprise a circuit (310) for charging control in the EVSE mode. The EVSE mode charging control circuit of the first EV (100) may comprise a PWM signal generator. In the circuit (310) for charging control in the EVSE mode, Va represents a voltage of a pilot wire measured at an output terminal of the first EV (100), and Vg represents an internal voltage of the PWM signal generator.

When the first EV (100) operates in the EVSE mode, the first EV (100) may control power transmission and/or supply by transmitting a generated PWM signal to the second EV (200). The first EV (100) may control charging by changing a duty cycle of the PWM signal in the PWM signal generator and transmitting the PWM signal. In addition, the first EV (100) may more precisely control charging through PLC (power line communication) communication that is communicable through a PWM signal transmission circuit.

Referring to FIG. 4b, the first EV (100) may operate in an EV mode in which power may be received and/or supplied from the EVSE (20). Accordingly, the first EV (100) may comprise a circuit (320) for charging control in the EV mode. The EV mode charging control circuit of the first EV (100) may comprise a resistor and a switch. In the circuit (320) for charging control in the EV mode, Vb indicates parameters measured by the first EV (100), including a voltage level, a duty cycle, and a frequency. The EV mode charging control circuit of the first EV (100) may comprise a switch (S1) connected to the resistor. A magnitude of a voltage detected in the circuit may be controlled by turning the switch (S1) on and off.

As illustrated in FIGS. 4a and 4b, the first EV (100) may be provided with a circuit for operating in the EV mode and a circuit for operating in the EVSE mode. The circuit for operating in the EV mode and the charging control circuit for operating in the EVSE mode may be provided separately. However, the charging control circuit for operating in the EV mode and the EVSE mode may be provided as an integrated unit. In this case, an integrated circuit for operating in the EV mode and the EVSE mode may further comprise a configuration for switching from the EV mode to the EVSE mode or from the EVSE mode to the EV mode.

According to one embodiment of the present invention, a charging control circuit for controlling charging of a first EV (100) operating in an EVSE mode for supplying and/or transmitting power may be implemented in a form in which a charging control circuit for operating in an EV mode and the EVSE mode is provided as an integrated unit. The integrated charging control circuit may further comprise a switch (S) connected to a resistor R5 of a circuit (320) for charging control in the EV mode, in order to effectively switch between the EV mode and the EVSE mode. The integrated charging control circuit may switch between the EV mode and the EVSE mode by switching an on/off state of the switch (S). In addition, the charging control circuit may detect an error or an abnormal state occurring during a switching process between the EV mode and the EVSE mode by monitoring the on/off state of the switch (S).

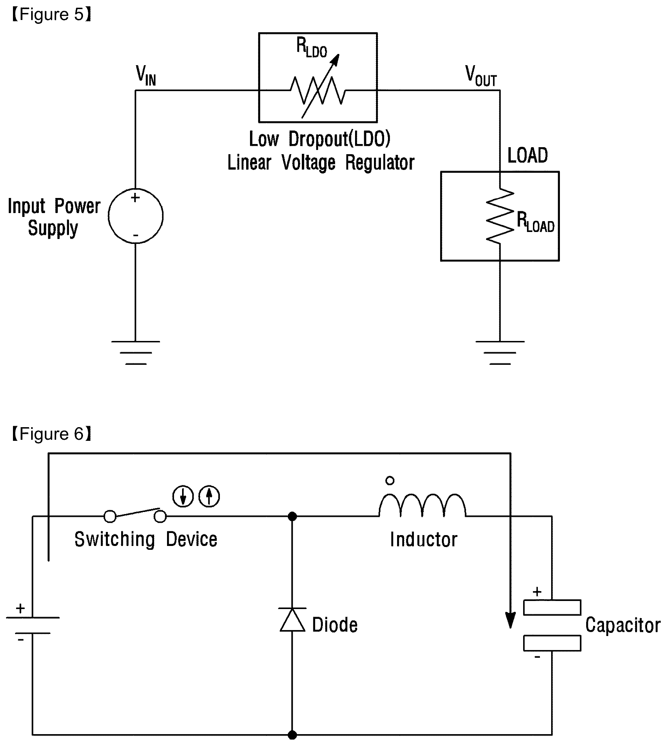

FIG. 5 is a diagram for describing a linear regulator (LDO) included in a charging control signal generation unit.

The charging control signal generation unit of the present invention may comprise a linear regulator to generate a charging control signal for controlling V2V (vehicle-to-vehicle) charging. The charging control signal for controlling charging may be a PWM (pulse width modulation) signal.

In the present invention, a linear regulator may be used to supply a stable voltage during a process of generating the PWM signal. Specifically, the linear regulator may be an LDO (low-dropout regulator).

As illustrated, the linear regulator circuit may be configured to receive an input voltage VIN and output an output voltage VOUT through an internal resistor R_{LDO}, and the output voltage may be maintained at a stable level by a load R_{LOAD}. In addition, the linear regulator may linearly step down the input voltage to generate the output voltage through the internal resistor.

The charging control signal generation unit may improve accuracy of a charging control signal by performing precise voltage regulation in a state in which a voltage drop is minimized using a linear regulator.

Key advantages of a linear regulator (e.g., an LDO) may include relatively high efficiency due to a low voltage drop characteristic and low ripple noise. Unlike a conventional switching voltage regulator, an LDO may not include a high-frequency switching element, thereby reducing electromagnetic interference (EMI, electromagnetic interference) and minimizing signal distortion in a charging system. In addition, an LDO may provide a fast response time, thereby enabling a quick response to voltage fluctuations required by the PWM signal generation unit and helping ensure stability of a charging process. These characteristics may enable reliable power conversion in a V2V charging system and may contribute to effectively controlling voltage fluctuations that may occur during vehicle-to-vehicle charging.

FIG. 6 is a diagram for describing a DC-DC converter included in a charging control signal generation unit.

In the present invention, a charging control signal generation unit for vehicle-to-vehicle (V2V) charging may comprise a DC-DC converter to perform power conversion. The charging control signal for controlling charging may be a PWM (pulse width modulation) signal.

As illustrated, the DC-DC converter may comprise at least one of a switching device, a diode, an inductor, and a capacitor, and the circuit elements may be coupled to perform efficient voltage conversion. The switching device may be periodically turned on and off based on the PWM signal, thereby controlling a voltage by storing or releasing energy in the inductor.

In addition, the DC-DC converter may operate in a boost mode to generate an output voltage higher than an input voltage, thereby maintaining a voltage level required for a V2V charging system. When the switching device is turned on, the inductor may store energy, and when the switching device is turned off, the stored energy may be released to the capacitor through the diode, thereby increasing the output voltage.

A DC-DC converter may provide high conversion efficiency and may help ensure stability of a power supply required by a PWM signal generation unit. In addition, high-speed switching may improve responsiveness and may minimize voltage fluctuations that may occur during a charging process, thereby enhancing precision of a charging control signal.

In vehicle-to-vehicle (V2V) charging of the present invention, a linear regulator (e.g., an LDO) may be used to minimize signal distortion and to provide a stable voltage.

A typical DC-DC converter, in particular a buck converter, may provide high-efficiency power conversion, but because it operates in a high-frequency switching manner, switching noise is likely to be included in an output voltage.

In contrast, a linear regulator may operate based on a resistive voltage drop, thereby generating little or no switching noise during voltage regulation and exhibiting very low output voltage ripple. Therefore, the linear regulator may be advantageous in maintaining a precise voltage level required by a charging control signal generation unit (e.g., a PWM (pulse width modulation) signal).

In addition, a DC-DC converter may generate electromagnetic interference (EMI) depending on an output inductor and a switching frequency, which may lead to degradation of quality of a charging control signal.

In contrast, a linear regulator may generate little or no EMI during a power conversion process, thereby enabling stable operation without signal interference in a charging control system. This characteristic may enhance reliability of a V2V charging system, particularly when implementing a charging protocol sensitive to power fluctuations.

In addition, in terms of energy efficiency, a linear regulator may dissipate power as heat depending on a difference between an input voltage and an output voltage, and thus efficiency may decrease when the difference between the input voltage and the output voltage is large. In contrast, a DC-DC converter may provide relatively high conversion efficiency, for example, 85% or more in some implementations.

However, a linear regulator that may be applied to a charging control signal generation unit may have a relatively small difference between an input voltage and an output voltage, thereby minimizing unnecessary power consumption while maintaining signal quality. Therefore, in V2V charging control in the charging control signal generation unit, a low-noise characteristic may be a more important factor than high power efficiency, and thus may provide an advantage.

In addition, although a DC-DC converter may provide high conversion efficiency, heat may be generated during a switching process. For example, heat may be generated in a MOSFET and an inductor during high-speed switching.

In contrast, a linear regulator may operate based on a simple resistive voltage drop and thus may not require a separate high-frequency switching element, so that power loss may be relatively predictable and a heat dissipation structure may be simplified.

In addition, a linear regulator may provide an advantage in terms of an area occupied on a printed circuit board (PCB). A DC-DC converter may require multiple circuit elements, such as an inductor, a capacitor, and a switching element, and thus may occupy a relatively large PCB area in circuit design.

In contrast, a linear regulator may be configured as a relatively simple circuit and may not require an additional inductor or a large capacitor, thereby facilitating miniaturization on a PCB. This advantage may increase integration of a system and may optimize a design in a case in which a circuit is to be implemented in a limited space, such as a V2V charging control system.

In addition, a smaller area occupied on a printed circuit board (PCB) may increase power density of an electric vehicle communication controller (EVCC).

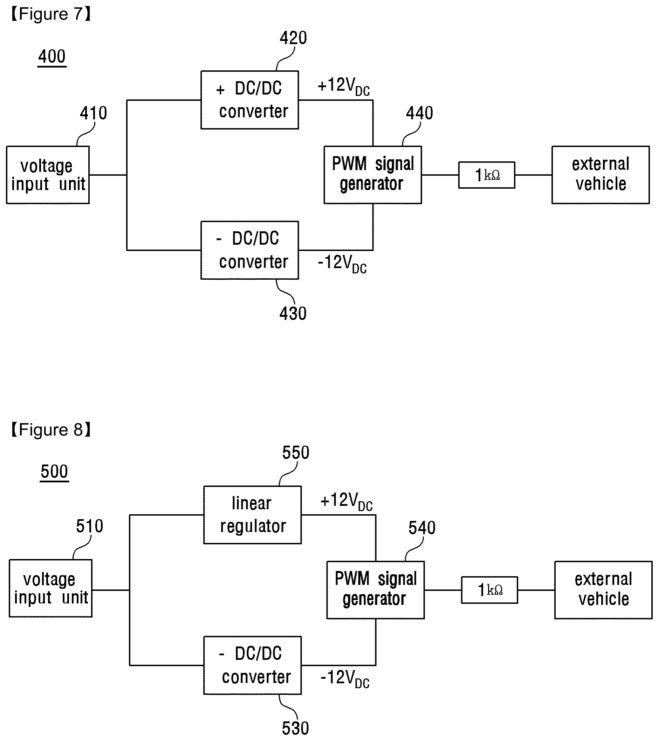

FIG. 7 is a diagram for describing a charging control signal generation unit including a DC-DC converter.

A charging control signal generation unit (400) including a DC-DC converter may perform DC-DC conversion based on an input voltage and may generate a PWM signal to perform a charging protocol with an external vehicle.

The charging control signal generation unit (400) may comprise a voltage input unit (410), a positive DC-DC converter (420), a negative DC-DC converter (430), and a PWM signal generator (440). The voltage input unit (410) may supply a voltage from an internal power source in a vehicle, may convert the voltage to +12 V_DC and -12 V_DC through the positive and negative DC-DC converters (420, 430), and may provide the converted voltages to the PWM signal generator (440).

In addition, an absolute value of the voltage input from the voltage input unit (410) may be less than 12 V. For example, the voltage input from the voltage input unit (410) may be 3.3 V, and the input voltage may be converted to +12 V_DC and - 12 V_DC through the positive and negative DC-DC converters (420, 430).

The charging control signal generation unit (400) may transmit an input voltage supplied through the voltage input unit (410) to the positive DC-DC converter (420) and the negative DC-DC converter (430). The positive DC-DC converter (420) may convert the input voltage to generate a +12 V_DC output, and the negative DC-DC converter (430) may generate a -12 V_DC output. The voltages converted into positive and negative voltages in this manner may be input to the PWM signal generator (440), and a PWM signal for communication with an external vehicle and for charging control may be generated.

The PWM signal generator (440) may further comprise an output resistor of 1 kΩ such that the generated PWM signal may be stably transmitted to an external vehicle. The output resistor (1 kΩ) may regulate a current flow of the PWM signal, thereby minimizing interference during signal transmission with the external vehicle and enabling accurate signal transmission.

FIG. 8 is a diagram for describing a charging control signal generation unit including a linear regulator according to one embodiment of the present invention.

The charging control signal generation unit (500) may generate a stable PWM signal by using DC-DC conversion and a linear regulator (e.g., an LDO) with an input voltage provided through a voltage input unit (510). The charging control signal generation unit (500) may comprise the voltage input unit (510) configured to receive the input voltage, a negative DC-DC converter (530), a PWM signal generator (540), and a linear regulator (550). The input voltage may be, for example, 12 V.

The input voltage received by the voltage input unit (510) may be converted to -12 V_DC through the negative DC-DC converter (530) and may be regulated to a stable +12 V_DC through the linear regulator (550). The converted and regulated positive and negative voltages may be provided to the PWM signal generator (540) to generate a PWM signal for charging control.

In the charging control signal generation unit (500), an input voltage provided from the voltage input unit (510) may be supplied to the negative DC-DC converter (530) and the linear regulator (550). The negative DC-DC converter (530) may convert the input voltage to generate a -12 V_DC output, and the linear regulator (550) may generate a low-noise +12 V_DC output based on the input voltage.

When the generated positive and negative voltages are input to the PWM signal generator (540), the PWM signal generator (540) may generate a PWM signal for charging communication with an external vehicle.

The PWM signal generated by the PWM signal generator (540) may be transmitted to the external vehicle through an output resistor of 1 kΩ. The output resistor (1 kΩ) may limit a signal current and may help ensure stability of the PWM signal.

The charging control signal generation unit (500) may comprise a linear regulator and thus may have a low-noise characteristic compared to the DC-DC converter-based charging control signal generation unit (400), thereby improving signal quality in communication with an external vehicle. In addition, the charging control signal generation unit (500) may use a linear regulator only for positive voltage conversion, while a DC-DC converter may be used for negative voltage conversion.

Specifically, in the charging control signal generation unit (500), a linear regulator (550) may be used to generate a positive voltage (+12 V_DC), while a DC-DC converter (530) may be used to generate a negative voltage (-12 V_DC). This may be because a linear regulator may provide a low-noise and stable voltage output, but may regulate a voltage only to a level lower than an input voltage.

In general, a linear regulator may step down a voltage and may not generate a voltage higher than an input voltage (e.g., 12 V) or a voltage having a reversed polarity. Accordingly, to generate a -12 V_DC voltage, a converter capable of changing a voltage polarity may be used.

In addition, a DC-DC converter (530) may convert an input voltage (e.g., +12 V) to -12 V_DC using a switching method, thereby providing high conversion efficiency. If a linear regulator is used in a process of generating -12 V_DC, a voltage more negative than -12 V_DC may be separately supplied. This may require an additional power supply circuit, thereby increasing complexity of an overall system.

In contrast, by using a DC-DC converter, a negative voltage may be directly generated from a single input voltage (e.g., +12 V), thereby simplifying a design and enabling efficient power conversion.

Therefore, the charging control signal generation unit (500) may use a linear regulator (550) having a low-noise characteristic to generate a positive voltage (+12 V_DC) and may apply a DC-DC converter (530) capable of polarity conversion to generate a negative voltage (-12 V_DC), thereby increasing power conversion efficiency of the charging control signal generation unit (500).

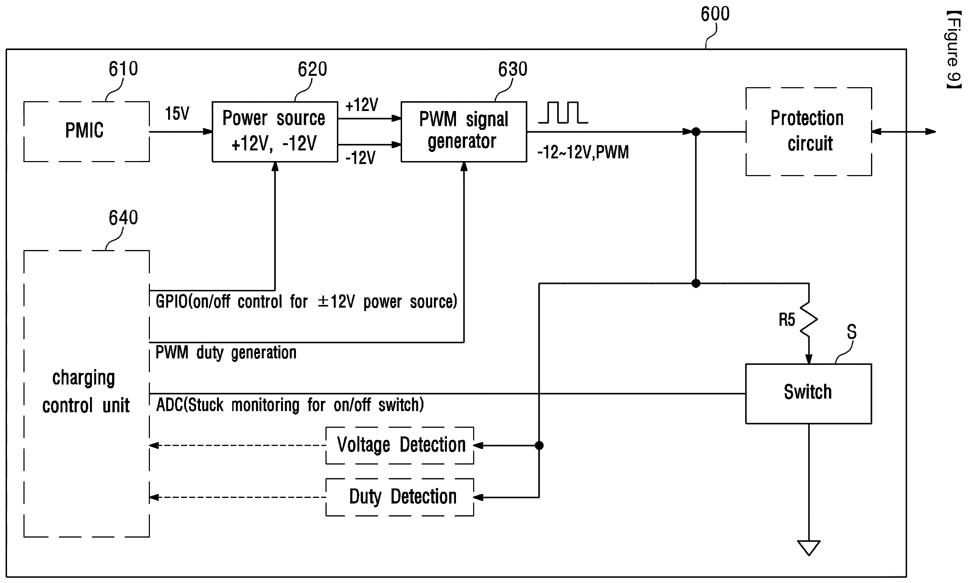

FIG. 9 is a diagram illustrating a circuit for controlling a charging mode of an electric vehicle according to the present invention.

A circuit for controlling a charging mode of an electric vehicle according to the present invention may be an integrated charging control circuit in which a charging control circuit for operating in an EVSE mode and a charging control circuit for operating in an EV mode are integrated. The integrated charging control circuit (600) may comprise a PMIC (power management integrated chip) (610), a power source (620), a PWM signal generator (630), a charging control unit (640), and a switch (S).

The PMIC (610) may be connected to the power source (620) and may control generation of a PWM signal. The PMIC (610) may apply a first voltage to the power source (620), and the power source (620) may convert the first voltage into a second voltage and output the second voltage. The power source (620) may convert a first voltage into a second voltage and may provide the second voltage to the PWM signal generator (630), and the PWM signal generator (630) may generate a PWM signal based on the second voltage and may transmit the PWM signal to a second EV (200) that receives power transmitted and/or supplied from a first EV (100).

The integrated charging control circuit (600) may further comprise a PLC generation unit configured to generate PLC signals. The PLC generation unit may perform charging control via PLC (power line communication) communication. For example, charging control via PLC communication may be performed by bidirectionally exchanging charging control signals for DC charging, rapid charging, and fast charging.

When operating in an EVSE mode, the charging control unit (640) may transmit a charging control signal (e.g., a CP signal) to an external vehicle. The charging control unit (640) may be connected to the power source (620) and may control an on/off operation of the power source (620). For example, the charging control unit (640) may control that +12 V and -12 V voltages are provided to the PWM signal generator (630) via a GPIO (general purpose input/output). In addition, the charging control unit (640) may be connected to the PWM signal generator (630) and may control generation of a PWM signal. Specifically, the charging control unit (640) may control a voltage level, a duty cycle, and a frequency of the PWM signal.

When operating in an EV mode, the charging control unit (640) may receive a charging control signal (e.g., a CP signal) from an external vehicle. The charging control unit (640) may receive a voltage, a duty cycle, and a frequency of the charging control signal. In addition, the charging control unit (640) may receive and/or communicate the charging control signal via PLC communication and CAN communication. The charging control unit (640) may further comprise a communication unit for receiving and/or communicating the charging control signal from the external vehicle. In addition, the charging control unit (640) may monitor and/or control an on/off state of the switch (S).

The switch (S) may be switched on and off such that a corresponding circuit operates as the charging control circuit (600) operates in an EVSE mode or the EV mode. The on/off state of the switch (S) may be controlled by a communication circuit in a vehicle (e.g., CAN communication and/or PLC communication). In addition, the on/off state of the switch (S) may be controlled based on a type of an object connected to a vehicle inlet and/or user settings. Operation of the charging control circuit (600) according to the on/off state of the switch (S) will be described in more detail below.

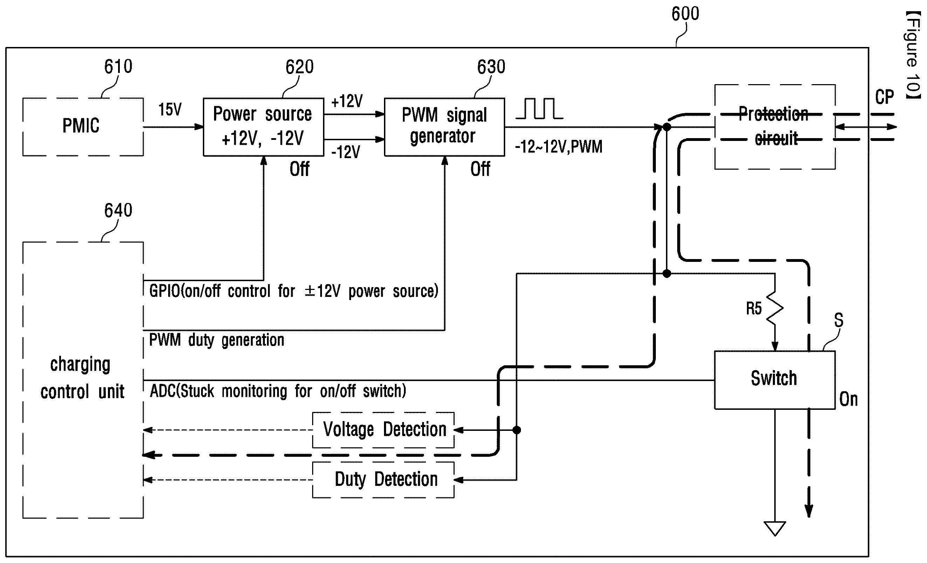

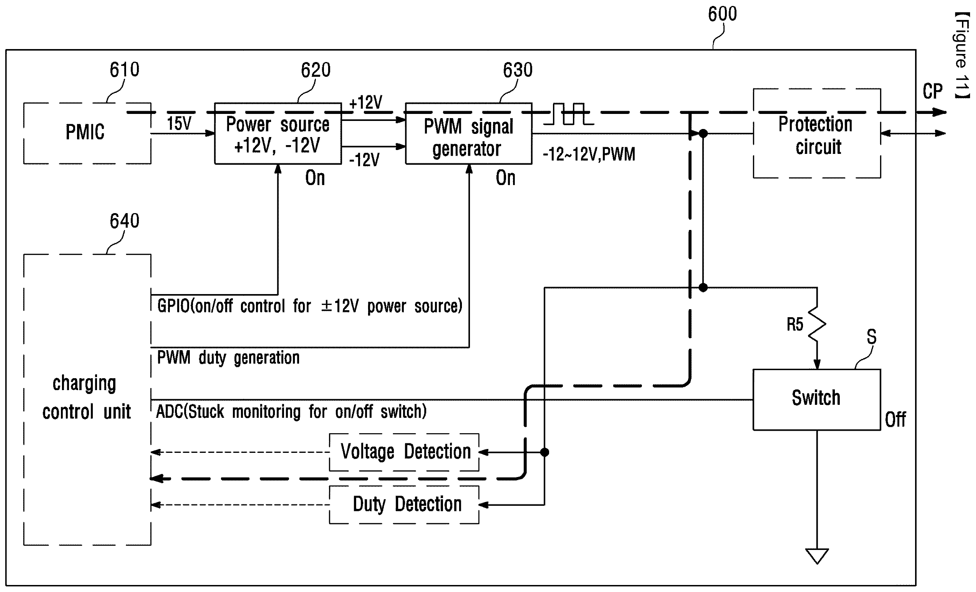

FIG. 10 is a diagram for illustrating an operation of an integrated charging control circuit when an electric vehicle operates in an EV mode according to the present invention. FIG. 11 is a diagram for illustrating an operation of an integrated charging control circuit when an electric vehicle operates in an EVSE mode according to the present invention.

When an electric vehicle according to the present invention operates in an EV mode, the switch (S) may be turned on. That is, when the switch (S) is in an on state, the integrated charging control circuit (600) may operate in the EV mode. While the integrated charging control circuit (600) operates in the EV mode, the power source (620) and the PWM signal generator (630) may be turned off. In contrast, a charging control signal (e.g., a CP signal and/or a PLC signal) may be received from an external device by the charging control unit (640).

When the electric vehicle according to the present invention operates in an EVSE mode, the switch (S) may be turned off. That is, when the switch (S) is in an off state, the integrated charging control circuit (600) may operate in the EVSE mode. While the integrated charging control circuit (600) operates in the EVSE mode, the PMIC (610) may apply a first voltage to the power source (620). Thereafter, the power source (620) may apply a second voltage to the PWM signal generator (630), and the PWM signal generator (630) may convert the second voltage to generate a PWM signal. The generated PWM signal may be transmitted to a charging control unit of a second EV (200) that receives power transmitted and/or supplied from the electric vehicle, or to a charging control unit of a power receiving device.

In addition, the integrated charging control circuit (600) may further comprise a PLC signal generation unit. The PLC signal generation unit may generate a PLC signal, and the generated PLC signal may be transmitted to the charging control unit of the second EV (200) or the charging control unit of the power receiving device through a CP port of the connector/inlet (30).

The integrated charging control circuit (600) may switch between an EV mode and an EVSE mode by changing an on/off state of the switch (S). By switching between the EV mode and the EVSE mode through the on/off state change of the switch (S), a cost advantage may be obtained compared to a case in which separate modules respectively supporting the EV mode and the EVSE mode are provided, and control may be facilitated by implementing the modules on a single board. The integrated charging control circuit (600) may enable switching between modes by integrating, into one, a circuit and a module configured to control the EV mode and the EVSE mode. In addition, error detection and monitoring may be performed to detect and monitor an error that may occur during switching.

When the integrated charging control circuit (600) is switched from the EV mode to the EVSE mode, the integrated charging control circuit (600) may monitor a voltage of the power source (620). Specifically, in the EV mode, since the switch (S) is in an on state, the power source (620) and the PWM signal generator (630) may be in an off state, and thus a voltage detected and monitored by a positive/negative voltage detection circuit may be 0 V. In contrast, in the EVSE mode, since the switch (S) is in an off state, the power source (620) may be in an on state, and thus +12 V may be detected and monitored by the positive voltage detection circuit and -12 V may be detected and monitored by the negative voltage detection circuit.

When the integrated charging control circuit (600) is switched from an EV mode to an EVSE mode, the integrated charging control circuit (600) may monitor a state of the switch (S) connected to a resistor (R5). Specifically, as described above, the switch (S) may be in an on state in the EV mode, and the switch (S) may be in an off state in the EVSE mode. The integrated charging control circuit (600) may detect and/or monitor the on/off state of the switch (S). For example, the integrated charging control circuit (600) may detect and/or monitor the on/off state of the switch (S) through stuck monitoring of the switch (S). Stuck monitoring may detect whether a voltage measured by an analog-to-digital converter (ADC) transitions between a voltage range corresponding to the on state and a voltage range corresponding to the off state, based on one or more predetermined thresholds.

According to one embodiment of the present invention, the switch (S) may change state based on a mode switching signal (e.g., a control-unit signal from a BMS and/or a CMU) received via in-vehicle communication (e.g., CAN communication) for switching between an EV mode and an EVSE mode. In this case, the integrated charging control circuit (600) may monitor a state of the switch (S).

The integrated charging control circuit (600) according to one embodiment of the present invention may further comprise a monitoring unit. The monitoring unit may comprise a BMU, a CMU, an MCU, and/or a monitoring circuit, and may monitor a state of the switch (S) and a voltage and/or a state of the power source (620).

In addition, if a monitored state value of the switch (S) and/or a monitored state value of the power source (620) does not match a predetermined normal value, the monitoring unit may transmit an abnormal state value to the charging control unit (640). For example, when a voltage value corresponding to a normal state is 2.5 V while the switch (S) is in an on state, if 4 V is monitored, the monitored 4 V may be transmitted to the charging control unit (640) as an abnormal state value.

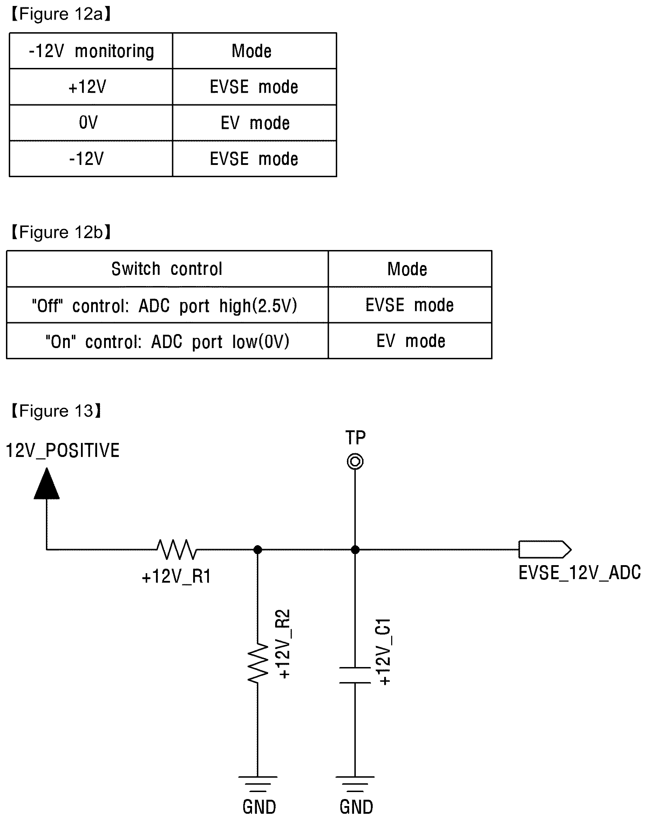

FIGS. 12a and 12b are diagrams for illustrating voltage values detected according to a charging mode of an electric vehicle according to the present invention.

According to one embodiment of the present invention, the integrated charging control circuit (600) may operate by being switched from an EV mode to an EVSE mode by changing a state of the switch (S) from an on state to an off state.

According to one embodiment of the present invention, the power source (620) may be in an off state when operating in an EV mode, and thus 0 V may be detected and/or monitored. In contrast, when operating in an EVSE mode, the power source (620) may be in an on state, and thus +12 V and -12 V may be detected and/or monitored.

According to one embodiment of the present invention, the switch (S) may be in an on state in the EV mode, and 0 V may be detected and/or monitored at an output of a detection circuit for detecting a state of the switch (S). In addition, the switch (S) may be in an off state in the EVSE mode, and 2.5 V may be detected and/or monitored at the output of the detection circuit. The value of 2.5 V is provided as an example, and it should be understood that a different voltage value may be detected depending on a configuration of the detection circuit for detecting and/or monitoring the state of the switch (S).

In addition, the integrated charging control circuit (600) may further comprise a monitoring unit. The monitoring unit may monitor a state of the power source (620) and/or a state of the switch (S), and may comprise a positive voltage detection circuit and a negative voltage detection circuit of the power source (620), and a detection circuit for detecting an operating state of the switch (S).

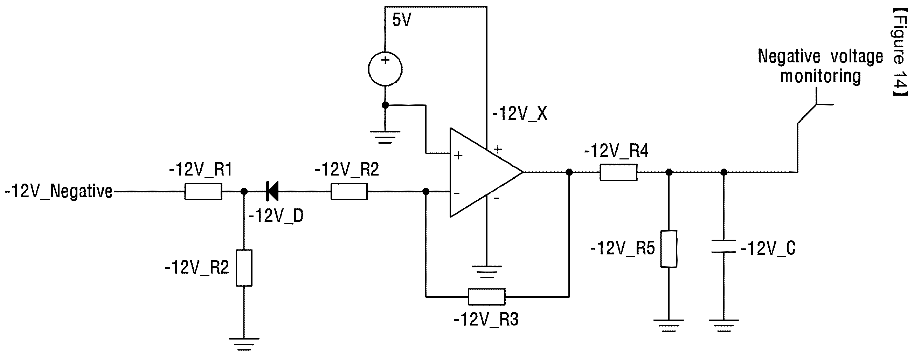

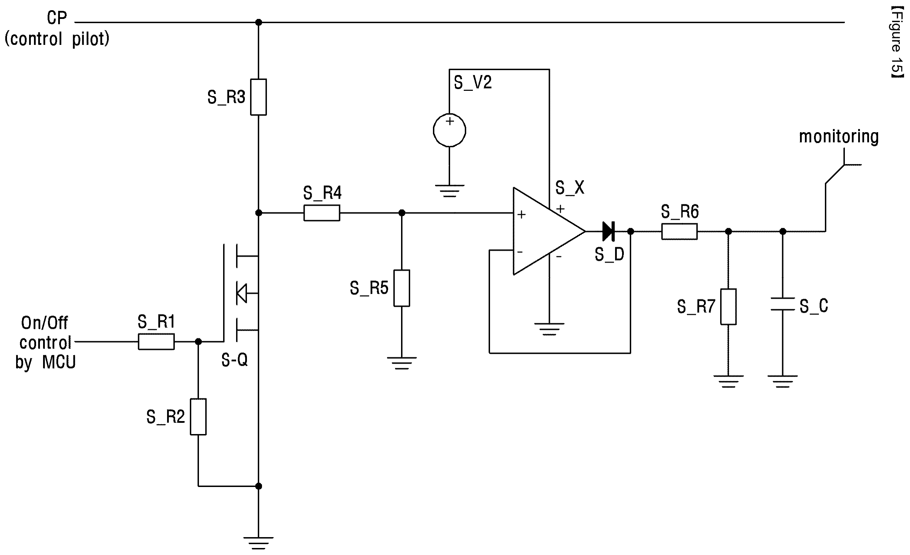

FIG. 13 is a diagram for illustrating an example of a positive voltage detection circuit of an electric vehicle charging control circuit according to the present invention. FIG. 14 is a diagram for illustrating an example of a negative voltage detection circuit of the electric vehicle charging control circuit according to the present invention. FIG. 15 is a diagram for illustrating an example of a switch operation detection circuit of the electric vehicle charging control circuit according to the present invention.

A positive voltage detection circuit of an electric vehicle charging control circuit according to one embodiment of the present invention may be a circuit for detecting a positive voltage when the integrated charging control circuit (600) operates in an EVSE mode. The positive voltage detection circuit may include an analog-to-digital converter (ADC) disposed at one end of the circuit, a capacitor connected to ground, a resistor connected to ground, and a resistor connected to a detection terminal.

A negative voltage detection circuit of an electric vehicle charging control circuit according to one embodiment of the present invention may comprise an amplifier circuit for detecting a negative voltage. The amplifier circuit may comprise a diode, a positive-voltage power supply, and an amplifier. Specifically, a negative voltage applied through the diode and the positive-voltage power supply within the circuit may be input to the amplifier, and the negative voltage may be detected at an output of the amplifier. In addition, the negative voltage detection circuit of the electric vehicle charging control circuit according to one embodiment of the present invention may receive a -12V_Negative signal at one end and detect and/or monitor a negative voltage at the other end.

A switch operation detection circuit of an electric vehicle charging control circuit according to one embodiment of the present invention may comprise a resistor (S_R3) connected to the switch and an amplifier. When the switch is in an on state, a voltage may be applied through the resistor (S_R3) connected to the switch, and the applied voltage may be input to the amplifier such that a predetermined voltage value may be detected and/or monitored. Conversely, when the switch is in an off state, a voltage may not be applied through the resistor (S_R3) connected to the switch, and thus 0 V may be detected and/or monitored. A resistance value of the resistor (S_R3) connected to the switch may be 2.75 Ω.

In addition, the switch operation detection circuit of the electric vehicle charging control circuit according to one embodiment of the present invention may receive, at one end of the switch operation detection circuit, an on/off control signal for the switch connected to the resistor (S_R3). One end of the resistor (S_R3) connected to the switch may be connected to a CP (Control Pilot) line.

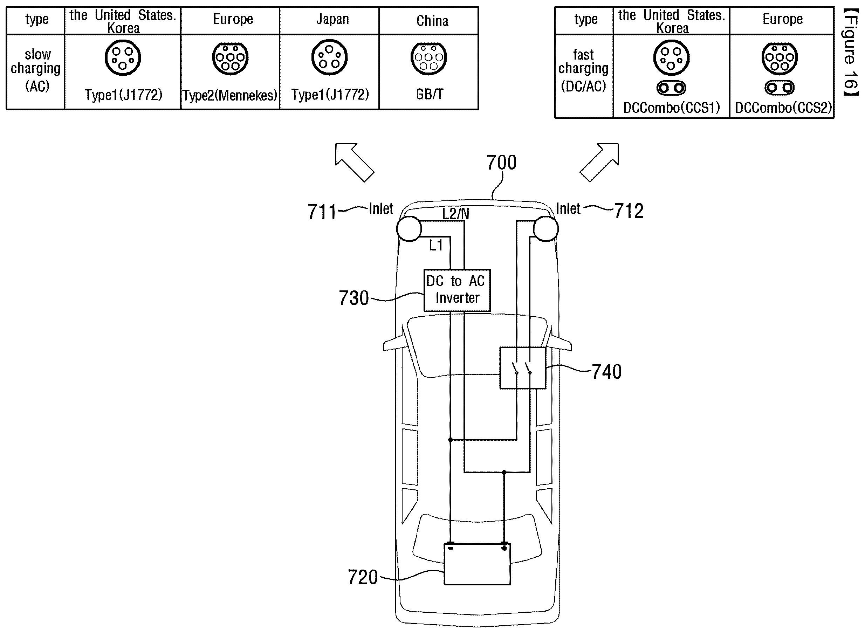

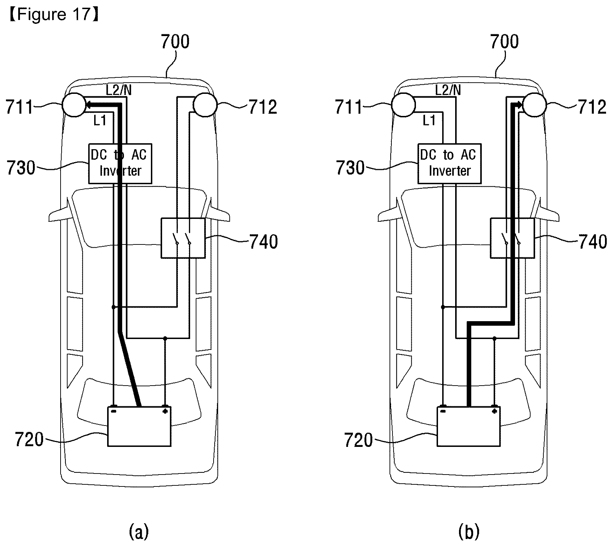

FIG. 16 is a diagram for illustrating an electric vehicle equipped with an electric vehicle charging system for vehicle-to-vehicle charging according to one embodiment of the present invention. FIG. 17 is a diagram for illustrating power transfer according to a charging type of the electric vehicle charging system of FIG. 16.

According to one embodiment of the present invention, an electric vehicle charging system (700) for vehicle-to-vehicle charging may comprise a charging inlet (711, 712), a battery (720), an inverter (730) configured to convert direct current into an alternating-current voltage, and a junction box (740).

The charging inlet (711, 712) may transmit power and signals for charging another vehicle from the battery (720). Specifically, the charging inlet (711, 712) may transmit a charging control signal generated through the charging control circuit (600) to the other vehicle, and may transmit and receive signals received from the other vehicle. In addition, the charging inlet (711, 712) may transmit power from the battery (720) to the other vehicle.

When the electric vehicle charging system (700) operates in a V2V mode, the charging inlet (711, 712) may transmit power according to a charging type (e.g., rapid charging, slow charging, AC charging, and/or DC charging).

The junction box (740) may be configured to transmit power received from the battery (720) for vehicle-to-vehicle charging to an onboard charger, the inverter (730), and an electric component inlet (712). In addition, the junction box (740) may cut off a high voltage by using a relay. For example, when a high voltage abnormally increases, the junction box (740) may perform a safety protection function by cutting off the high voltage through a fuse and/or a relay.

The electric vehicle charging system (700) may be configured to transmit power transmitted from the battery (720) to another vehicle through an appropriate inlet (711, 712) according to a charging type (e.g., rapid charging, slow charging, AC charging, and/or DC charging) of an electric vehicle. For example, when the electric vehicle charging system (700) performs only an AC charging type, power from the battery (720) may be transmitted to the inverter (730), and power converted by the inverter (730) to have an alternating-current voltage may be transmitted to another vehicle through the inlet (711).

As illustrated, charging that performs only an AC charging type may be charging according to Type 1 based on the SAE J1772 standard mainly used in the United States, Korea, and Japan, Type 2 mainly used in Europe, or charging according to GB/T, which is a Chinese charging standard. However, the present invention is not limited thereto, and it should be understood that the electric vehicle charging system (700) according to the present invention may perform charging according to a charging standard to be established in the future.

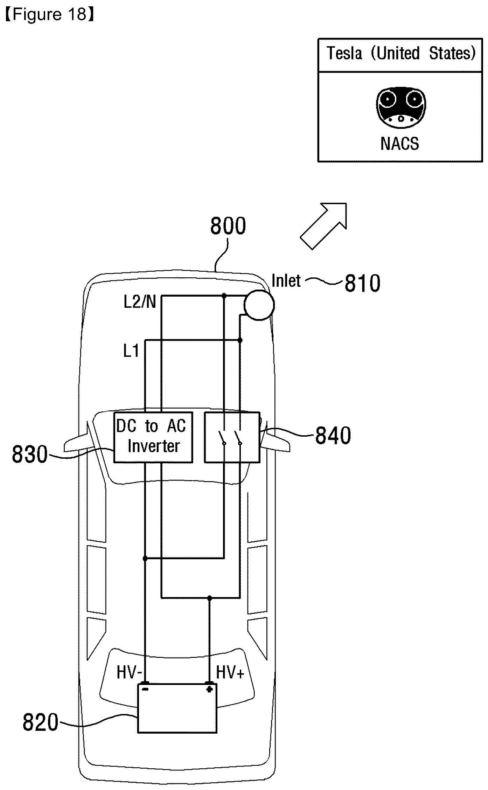

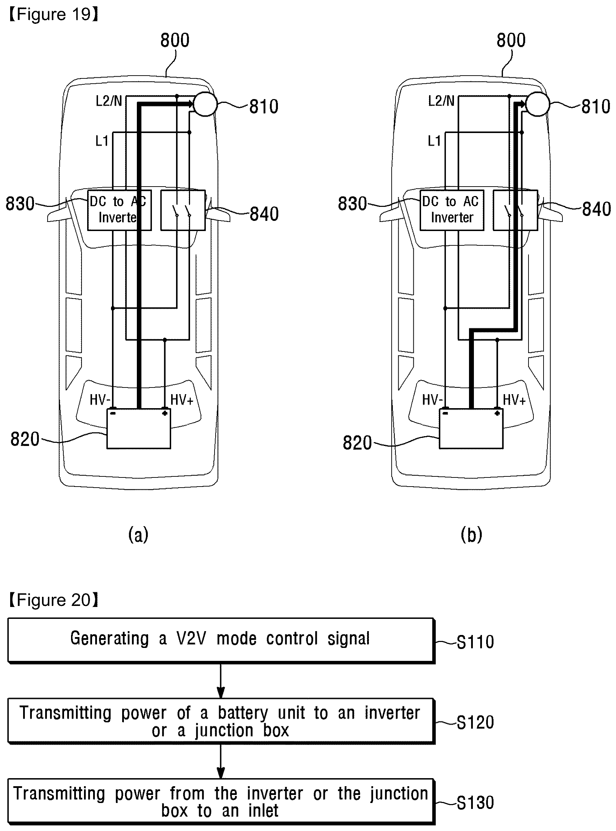

FIG. 18 is a diagram for illustrating an electric vehicle equipped with an electric vehicle charging system for vehicle-to-vehicle charging according to one embodiment of the present invention. FIG. 19 is a diagram for illustrating power transfer according to a charging type of the electric vehicle charging system of FIG. 18.

According to one embodiment of the present invention, an electric vehicle charging system (800) for vehicle-to-vehicle charging may comprise a charging inlet (810), a battery (820), an inverter (830) configured to convert direct current into an alternating-current voltage, and a junction box (840).

The charging inlet (810) may transmit power and signals for charging another vehicle from the battery (820). Specifically, the charging inlet (810) may transmit a charging control signal generated through the integrated charging control circuit (600) to the other vehicle, and may transmit and receive signals received from the other vehicle. In addition, the charging inlet (810) may transmit power from the battery (820) to the other vehicle.

When the electric vehicle charging system (800) operates in a V2V mode, the charging inlet (810) may transmit power according to a charging type (e.g., rapid charging, slow charging, AC charging, and/or DC charging).

The junction box (840) may be configured to transmit power received from the battery (820) for vehicle-to-vehicle charging to an onboard charger, the inverter (830), and an electric component inlet. In addition, the junction box (840) may cut off a high voltage using a relay. For example, when a high voltage abnormally increases, the junction box (840) may perform a safety protection function by cutting off the high voltage through a fuse and/or a relay.

The electric vehicle charging system (800) may be configured to transmit power transmitted from the battery (820) to another vehicle through the charging inlet (810) according to a charging type (e.g., rapid charging, slow charging, AC charging, and/or DC charging) of an electric vehicle. In addition, the charging inlet (810) of the electric vehicle charging system (800) may be configured to transmit power according to different charging types (e.g., an AC charging type and a DC charging type). For example, when the charging type is an AC charging type, power from the battery (820) may be transmitted to the inverter (830), and power converted by the inverter (830) to have an alternating-current voltage may be transmitted to another vehicle through the charging inlet (810). In addition, when the charging type is a DC charging type, power from the battery (820) may be transmitted to the junction box (840), and the junction box (840) may transmit the power to the other vehicle through the charging inlet (810).

As illustrated, charging performed by the charging system (800) configured to transmit power according to different charging types may be charging according to a NACS (TESLA Super Charger) standard used in North America. However, the present invention is not limited thereto, and it should be understood that the electric vehicle charging system (800) according to the present invention may perform charging according to a charging standard to be established in the future.

FIG. 20 is a flowchart for illustrating a method for vehicle-to-vehicle charging according to one embodiment of the present invention.

A method for vehicle-to-vehicle charging according to one embodiment of the present invention may comprise generating a charging control signal according to a V2V mode (S110), transmitting power from a battery (720, 820) to an inverter (730, 830) and/or a junction box (740, 840) according to a charging type (S120), and transmitting power from the inverter (730, 830) and/or the junction box (740, 840) to another vehicle through a charging inlet (711, 712, 810) (S130).

Generating the charging control signal according to the V2V mode (S110) may be performed by an electric vehicle charging control device and/or an integrated charging control circuit (600), and may generate a charging control signal for controlling charging of a battery of another vehicle in the V2V mode. Specifically, when an electric vehicle charging system (700, 800) operates in an AC charging mode or a DC charging mode, the electric vehicle charging control device and/or the integrated charging control circuit (600) may generate a charging control signal (e.g., a CP signal and/or a PLC signal) for performing a charging process according to each charging mode.

Transmitting the power from the battery (720, 820) to the inverter (730, 830) and/or the junction box (740, 840) (S120) may be performed by controlling the electric vehicle charging system (700, 800) based on the charging control signal generated in step (S110). For example, when the electric vehicle charging system (700, 800) operates in the AC charging mode, power from the battery (720, 820) may be transmitted to the inverter (730, 830), and the inverter (730, 830) may convert a direct-current voltage into an alternating-current voltage and output power to be transmitted to another vehicle. In addition, for example, when the electric vehicle charging system (700, 800) operates in the DC charging mode, power from the battery (720, 820) may be transmitted to the junction box (740, 840), and the junction box (740, 840) may provide a power path for transmitting power to another vehicle together with high-voltage cutoff and protection functions.

Transmitting the power from the inverter (730, 830) and/or the junction box (740, 840) to the charging inlet (711, 712, 810) (S130) may be performed by transmitting power output from the inverter (730, 830) and/or the junction box (740, 840) to the charging inlet (711, 712, 810) and transmitting the power through the charging inlet (711, 712, 810) for charging a battery of another vehicle. In addition, the electric vehicle charging control device and/or the integrated charging control circuit (600) may perform wired communication with the other vehicle to control charging of the battery of the other vehicle, and the wired communication may be implemented to transmit and receive the charging control signal through the charging inlet (711, 712, 810).

The scope of the present invention is not limited to the above-described embodiments, and may be implemented in various embodiments within the scope of the appended claims. It will be understood by those of ordinary skill in the art to which the present invention pertains that various modifications may be made without departing from the gist of the present invention as claimed in the claims, and such modifications are intended to be included within the scope of the claims of the present invention.

## Claims

1. An electric vehicle (EV) charging control device, comprising:
voltage input unit (510) configured to supply an input voltage;
a charging control signal generation unit (500) configured to generate a charging control signal based on the input voltage supplied from the voltage input unit (510); and
a charging control unit (22) configured to determine one or more characteristics of the charging control signal generated (540) by the charging control signal generation unit (500),
wherein the charging control signal generation unit (500) comprises a plurality of voltage conversion units (12), and
wherein each of the plurality of voltage conversion units (12) converts a voltage according to a different voltage conversion scheme.

2. The electric vehicle (EV) charging control device of claim 1,
wherein the charging control signal generation unit (500) further comprises a PWM signal generator (540) configured to generate the charging control signal based on converted voltages output from the plurality of voltage conversion units (12).

3. The electric vehicle (EV) charging control device of claim 1,
wherein the charging control signal is a PWM pulse width modulation signal.

4. The electric vehicle (EV) charging control device of claim 1,
wherein the plurality of voltage conversion units (12) comprise:
a positive voltage conversion unit (12) configured to convert the input voltage into a positive voltage; and
a negative voltage conversion unit (12) configured to convert the input voltage into a negative voltage.

5. The electric vehicle (EV) charging control device of claim 4,
wherein the positive voltage conversion unit (12) comprises a linear regulator (550) circuit (310).

6. The electric vehicle (EV) charging control device of claim 4,
wherein the negative voltage conversion unit (12) comprises a DC-DC converter circuit (310).

7. The electric vehicle (EV) charging control device of claim 1,
wherein the charging control signal is a signal for controlling charging according to at least one of CHAdeMO, CCS, NACS, and GB/T standards.

8. The electric vehicle (EV) charging control device of claim 1,
further comprising an inlet (30),
wherein the inlet (30) comprises a CP port for transmitting and receiving the charging control signal and a power port for transmitting and receiving power.

9. An electric vehicle charging system (700, 800), comprising:
an electric vehicle (EV) charging control device configured to control a V2V mode (S110);
an inlet (30) configured to transmit and receive power and signals according to the V2V mode (S110);
a battery unit (14) configured to transfer power according to the V2V mode (S110);
an inverter (730) configured to convert DC power received from the battery unit (14) into AC power; and
a junction box (840) configured to transfer power received from the battery unit (14) to the inlet (30).

10. The electric vehicle charging system (700, 800) of claim 9,
wherein the inlet (30) comprises a first inlet (30) for the AC charging mode (S110) and a second inlet (30) for the DC charging mode (S110).

11. The electric vehicle charging system (700, 800) of claim 10,
wherein, when performing the AC charging mode (S110), the electric vehicle (EV) charging control device is configured to generate a control signal for transmitting power from the battery unit (14) to the inverter (730) and transmitting power from the inverter (730) to the first inlet (30).

12. The electric vehicle charging system (700, 800) of claim 10,
wherein, when performing at least one of the AC charging mode (S110) and the DC charging mode (S110), the electric vehicle (EV) charging control device is configured to generate a control signal for transmitting power from the battery unit (14) to the junction box (840) and transmitting power from the junction box (840) to the second inlet (30).

13. The electric vehicle charging system (700, 800) of claim 9,
wherein, in (30) the V2V mode (S110), the inlet (30) is configured to transmit and receive both i power and signals according to the AC charging mode (S110) and ii power and signals according to the DC charging mode (S110).

14. The electric vehicle charging system (700, 800) of claim 13,
wherein, when performing the AC charging mode (S110), the electric vehicle (EV) charging control device is configured to generate a control signal for transmitting power from the battery unit (14) to the inverter (730) and transmitting power from the inverter (730) to the inlet (30), and
wherein, when performing the DC charging mode (S110), the electric vehicle (EV) charging control device is configured to generate a control signal for transmitting power from the battery unit (14) to the junction box (840) and transmitting power from the junction box (840) to the inlet (30).

15. The electric vehicle charging system (700, 800) of claim 9,
wherein the electric vehicle (EV) charging control device further comprises a communication unit (12) configured to communicate charging control information with an external device when operating in the V2V mode (S110).
